# EUROPEAN PATENT SPECIFICATION

(11) **EP 1 847 425 B1**
(45) Date of publication and mention of the grant of the patent: **25.11.2009**
(21) Application number: 06112901.1
(22) Date of filing: 21.04.2006
(51) Int. Cl.: B60S 1/40, B60S 1/38

(54) **A windscreen wiper device**
Scheibenwischervorrichtung
Dispositif d'essuie-glace

(43) Date of publication of application: 24.10.2007
(73) Proprietor: Federal-Mogul S.A., 6790 Aubange (BE)
(72) Inventor: Boland, Xavier, 6700 Arlon (BE)
(74) Representative: Hooiveld, Arjen Jan Winfried

(56) References cited:
- EP-A- 1 623 898
- EP-A- 1 795 406
- WO-A-03/084790
- DE-A1-102004 017 941
- FR-A- 2 848 956

## Description

The present invention relates to a windscreen wiper device comprising an elastic, elongated carrier element, as well as an elongated wiper blade of a flexible material, which can be placed in abutment with a windscreen to be wiped, which wiper blade includes opposing longitudinal grooves on its longitudinal sides, in which grooves spaced-apart longitudinal strips of the carrier element are disposed, wherein neighbouring ends of said longitudinal strips are interconnected by a respective connecting piece, which windscreen wiper device comprises a connecting device for an oscillating arm, wherein said oscillating arm is pivotally connected to said connecting device about a pivot axis near one end, with the interposition of a joint part.

Such a windscreen wiper device is known from European patent publication no. 1 403 156 of the same Applicant. This prior art windscreen wiper device is designed as a "yokeless" wiper device, wherein no use is made of several yokes pivotally connected to each other, but wherein the wiper blade is biassed by the carrier element, as a result of which it exhibits a specific curvature. In this prior art windscreen wiper device the joint part comprises at least one resilient tongue engaging in a correspondingly shaped hole provided in the oscillating arm, wherein the resilient tongue is rotatable along an hinge axis between an outward position retaining the wiper blade onto the oscillating arm and an inward position releasing the wiper blade from the oscillating arm. In order to connect the wiper blade onto the oscillating arm, the resilient tongue is initially pushed in against a spring force - as if it were a push button - and then allowed to spring back into the hole provided in the oscillating arm, thus snapping, that is clipping the resilient tongue into the hole. By subsequently pushing in again the resilient tongue against the spring force, the wiper blade may be released from the oscillating arm.

A windscreen wiper device according to the preamble of claim 1 is known from French patent publication no. 2,848,956 (Robert Bosch GmbH).

The object of the invention is to provide a improved windscreen wiper device.

In order to accomplish that objective, a windscreen wiper device of the type referred to in the introduction is characterized according to the invention in that the protrusions extend outwards on either side of said connecting device, wherein the protrusions and their co-axial through holes are at least substantially cylindrical. Said connecting device acts as a base part, wherein the connecting device is preferably fixedly connected to the longitudinal strips through a welding, brazing ("soldering"), glueing or clamping operation. The essence of the present invention is that said connecting device is a universal connection part for each type of interconnection between the wiper blade and the oscillating arm. A different type of said joint part to be connected to said connecting device may be used for each different type of interconnection between the wiper blade and the oscillating arm. The advantage achieved by the invention is that a unit consisting of said wiper blade and said connecting device connected to said longitudinal strips can be manufactured for each and every type of interconnection between said wiper blade and said oscillating arm, while only a relatively cheap and easy to manufacture joint part to be connected to said connecting has to correspond with a specific type of interconnection between said wiper blade and said oscillating arm. Thus, a universal connection between the wiper blade and the oscillating arm is obtained, so that car drivers are given the possibility to buy also non-original cheap wiper blades fitting the original oscillating arms on their cars. Said joint part may be connected to said connecting device through a snapping/clipping operation.

It is noted that said protrusions that function as bearing surfaces are spaced far apart, so that the forces exerted thereon will be relatively low.

In one preferred embodiment of a windscreen wiper device in accordance with the invention said joint part has an at least substantially U-shaped cross-section at the location of its connection to said connecting device, wherein said joint part in each leg of said U-shaped cross-section is provided with a recess provided coaxially with said pivot axis.

In another preferred embodiment of a windscreen wiper device according to the invention said joint part is pivotally connected to said connecting device, wherein said protrusions of said connecting device pivotally engage in said recesses of said joint part, wherein said joint part comprises at least one resilient tongue engaging in a correspondingly shaped hole provided in said oscillating arm, wherein said resilient tongue is rotatable along a hinge axis between an outward position retaining said wiper blade onto said oscillating arm and an inward position releasing said wiper blade from said oscillating arm. Said hinge axis is particularly located near an inner edge of said joint part. In the alternative said hinge axis is located near an outer edge of said joint part, as described in European patent application no. 04103735.9 of the same Applicant. In the latter case said resilient tongue is forced in the outward position under the influence of a moment in case a force is exerted on the wiper blade in a direction away from the oscillating arm. Particularly, the counterforce exerted by the oscillating arm on the resilient tongue engages at a point located behind the hinge axis, seen in the direction of the force exerted on the wiper blade. In other words, said moment of force ensures in a natural way that the resilient tongue is forced automatically in its outward position, that is its position retaining the wiper blade onto the oscillating arm. On the contrary, in the above-mentioned European patent publication no. 1 403 156 of the same Applicant said moment during use compels the resilient tongue to automatically take its inward position, thereby releasing the wiper blade from the oscillating arm, with all negative consequences involved.

In another preferred embodiment of a windscreen wiper device in accordance with the invention the oscillating arm has an at least substantially U-shaped cross-section at the location of its connection to said joint part, wherein said hole is provided in a base of said U-shaped cross-section.

In addition thereto or in the alternative said joint part comprises at least two lateral resilient tongues extending outwardly, wherein the oscillating arm has an at least substantially U-shaped cross-section at the location of its connection to said joint part, and wherein each tongue engages in a correspondingly shaped hole provided in a leg of said U-shaped cross-section.

In another preferred embodiment of a windscreen wiper device according to the invention said hole(s) has/have a closed circumference. Such (a) closed hole(s) enhance(s) the retention of the connection device/joint part onto the oscillating arm in all possible directions, particularly both horizontally and vertically. In the alternative, said hole(s) has/have a non-closed circumference.

In another preferred embodiment of a windscreen wiper device in accordance with the invention said joint part is made of plastic (including any synthetic material having some flexibility).

In another preferred embodiment of a windscreen wiper device according to the invention said joint part is pivotally connected to said connecting device, wherein said protrusions of said connecting device pivotally engage in said recesses of said joint part, wherein said joint part has an at least substantially U-shaped cross-section at the location of its connection to said connecting device, and wherein said joint part comprises a recess in the base of the U-shaped cross-section for snappingly connecting said oscillating arm to said joint part. Particularly, a windscreen wiper device wherein a resilient free end of said joint part can pivot about a hinge axis for snappingly connecting said oscillating arm to said joint part.

In another preferred embodiment of a windscreen wiper device in accordance with the invention said resilient free end of said joint part can pivot about said hinge axis between a first position for mounting or dismounting a free end of said oscillating arm into or from said recess in the base of the U-shaped cross-section of said joint part, and a second position for connecting said free end of said of said oscillating arm to said joint part.

In another preferred embodiment of a windscreen wiper device according to the invention said joint part comprises at least one protrusion extending laterally from a longitudinal side of said joint part, said protrusion hooking behind a correspondingly shaped protrusion on said oscillating arm for blocking a longitudinal movement of said wiper blade with respect to said oscillating arm. In order to connect said oscillating arm to said joint part said oscillating arm is preferably pivoted relative to said joint part in an inclined position with respect to said wiper blade, so that said protrusion on said joint part is hooking behind said correspondingly shaped protrusion on said oscillating arm, wherein said oscillating arm is pivoted back relative to said joint part in a parallel position with respect to said wiper blade, so that a free end of said oscillating arm is snapped in said recess at the free end of said joint part.

In another preferred embodiment of a windscreen wiper device in accordance with the invention said connecting device is pivotally connected to said oscillating arm near its free end about a pivot axis of a transverse pivot pin provided on said oscillating arm, said pivot pin being inserted into said co-axial through holes of said protrusions of said connecting device. Particularly, said joint part has an at least substantially U-shaped cross-section at the location of its connection to said connecting device, wherein said joint part in each leg of said U-shaped cross-section is provided with a recess provided coaxially with said pivot axis, said recesses being co-axial, and wherein said pivot pin is inserted into said co-axial recesses and into said co-axial through holes of said protrusions of said connecting device.

The invention will now be explained in more detail with reference to figures illustrated in a drawing, wherein:
- Figure 1 is a perspective, schematic view of a preferred embodiment of a windscreen wiper device in accordance with the invention;
- Figures 2 and 3 show various successive steps for fitting the connecting device, the joint part and the oscillating arm of figure 1 together; and
- Figures 4 and 5 correspond to figure 3, but now relating to different types of joint parts and oscillating arms.

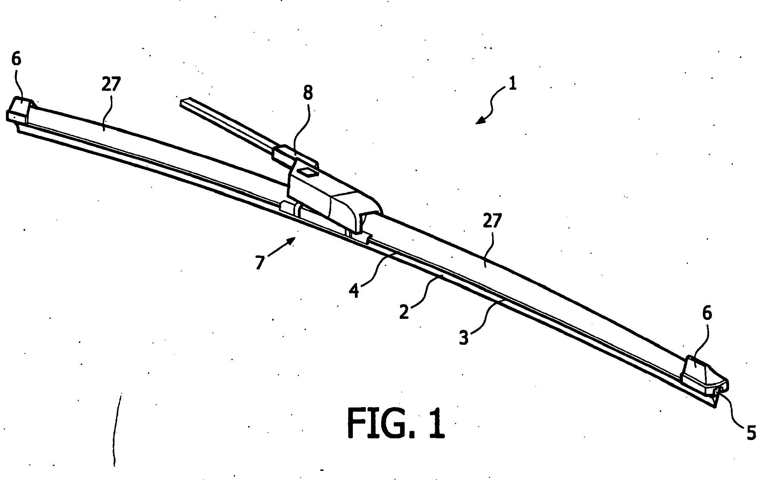

Figure 1 shows a preferred variant of a windscreen wiper device 1 according to the invention. Said windscreen wiper device 1 is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the wiper blade 2, as it were, which is thus biassed in a curved position (the curvature in operative position being that of a windscreen to be wiped). Neighbouring ends 5 of the strips 4 are interconnected on either side of the windscreen wiper device 1 by means of connecting pieces 6 functioning as clamping members. In this embodiment, the connecting pieces 6 are separate constructional elements, which may be form-locked ("positive locking" or "having a positive fit") or force-locked to the ends 5 of the strips 4. In another preferred embodiment, said connecting pieces 6 are in one piece with the strips 4 made of spring band steel. In the latter case said connecting pieces 6 form transverse bridges for the strips 4, as it were.

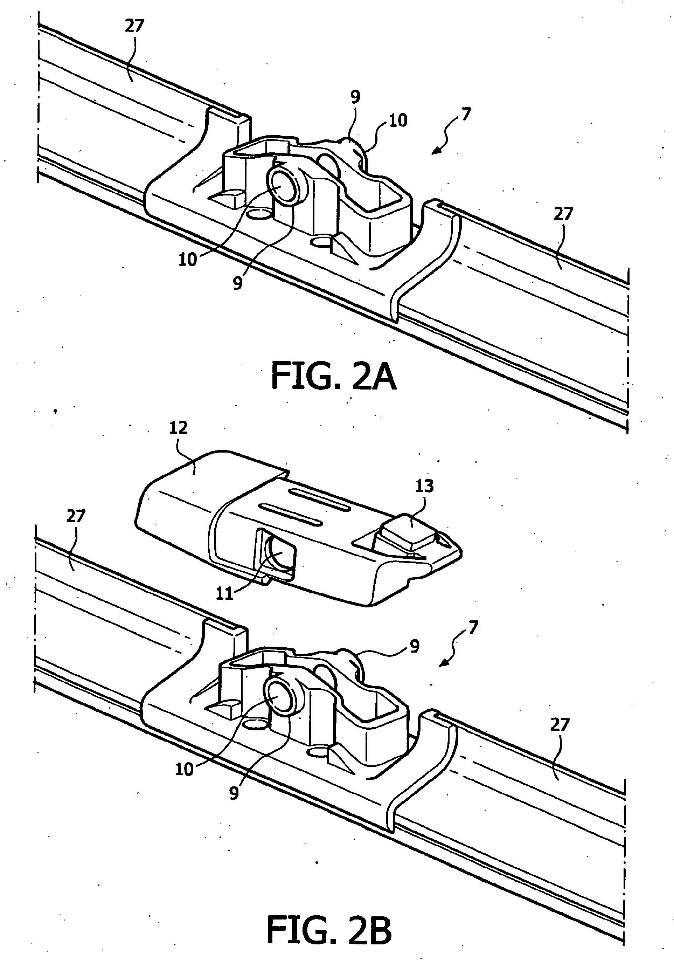

The windscreen wiper device 1 is furthermore built up of a connecting device 7 of plastic material for an oscillating arm 8. Alternatively, the connecting device 7 may also be made of metal, such as steel or aluminum. The connecting device 7 is particularly welded, brazed ("soldered"), glued or clamped onto said strips 4. The oscillating arm 8 is pivotally connected to said unit about a pivot axis near one end, as will be described hereunder. The connecting device 7 is a universal part in the sense that it can be used for each and every type of interconnection between the wiper blade 2 and the oscillating arm 8, that is, for example, for said interconnection as shown is figures 2, 3 and 4, respectively.

With reference to figure 2A the connecting device 7 comprises two cylindrical protrusions 9 extending outwards on either side of said connecting device 7, said protrusions 9 having co-axial through holes 10. Alternatively, said protrusions 9 may have a spherical or frusto-conical shape. These protrusions 9 pivotally engage in identically shaped cylindrical recesses 11 of a plastic joint part 12 (figure 2B). In the alternative the recesses 11 may have a non-closed shape (i.e. open circumference). Said protrusions 9 act as bearing surfaces at the location of a pivot axis in order to pivot the joint part 12 (and the oscillating arm 8 attached thereto) about said pivot axis near one end of the oscillating arm 8. The protrusions 9 are preferably in one piece with the connecting device 7.

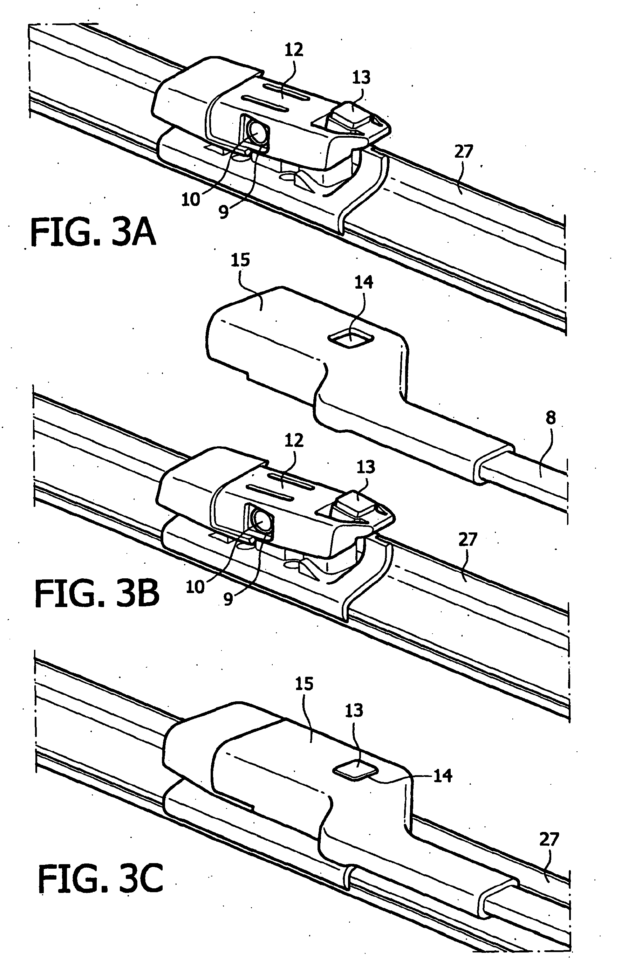

With reference to figures 2B and 3, the joint part 12 comprises one resilient tongue 13 extending outwardly, while the oscillating arm 8 has an U-shaped cross-section at the location of its connection to said joint part 12, so that the tongue 13 engages in an identically shaped hole 14 provided in a base 15 of said U-shaped cross-section (figure 3B). The joint part 12 being already clipped onto the connecting device 7 is pivoted relative to said connecting device 7, so that said joint part 12 can be easily slid on a free end of the oscillating arm 8. During this sliding movement the resilient tongue 13 is initially pushed in against a spring force and then allowed to spring back into said hole 14, thus snapping, that is clipping the resilient tongue 13 into the hole 14 (figure 3C). This is a so-called bayonet-connection. The oscillating arm 8 together with the joint part 12 may then be pivoted back in a position parallel to the wiper blade 2 in order to be ready for use. By subsequently pushing in again said resilient tongue 13 against the spring force (as if it were a push button), the connecting device 7 and the joint part 2 together with the wiper blade 2 may be released from the oscillating arm 8. Dismounting the connecting device 7 with the wiper blade 2 from the oscillating arm 8 is thus realized by sliding the connecting device 7 and the joint part 2 together with the wiper blade 2 in a direction away from the oscillating arm 8.

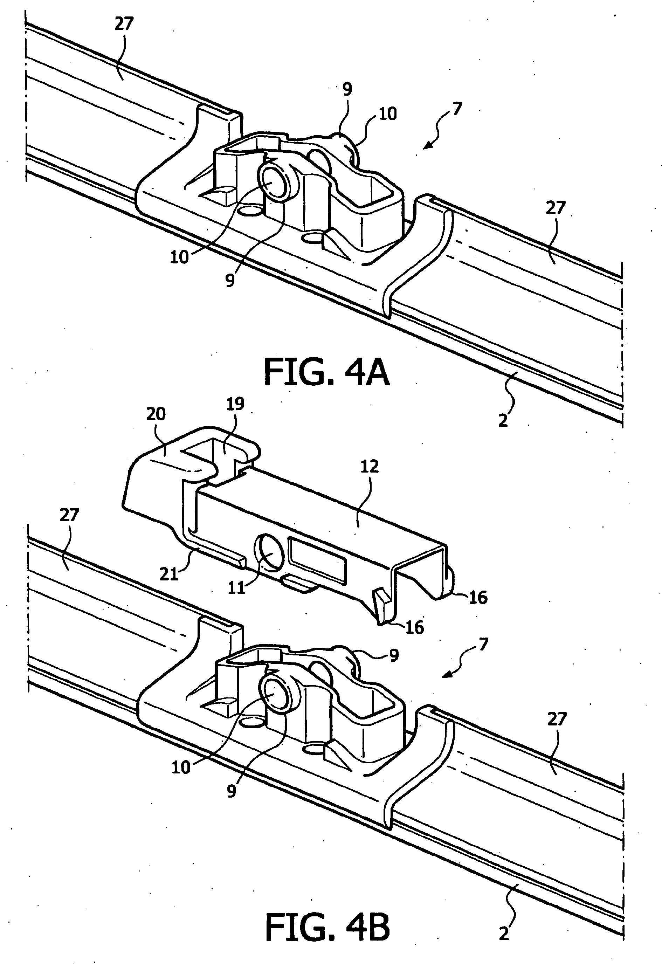

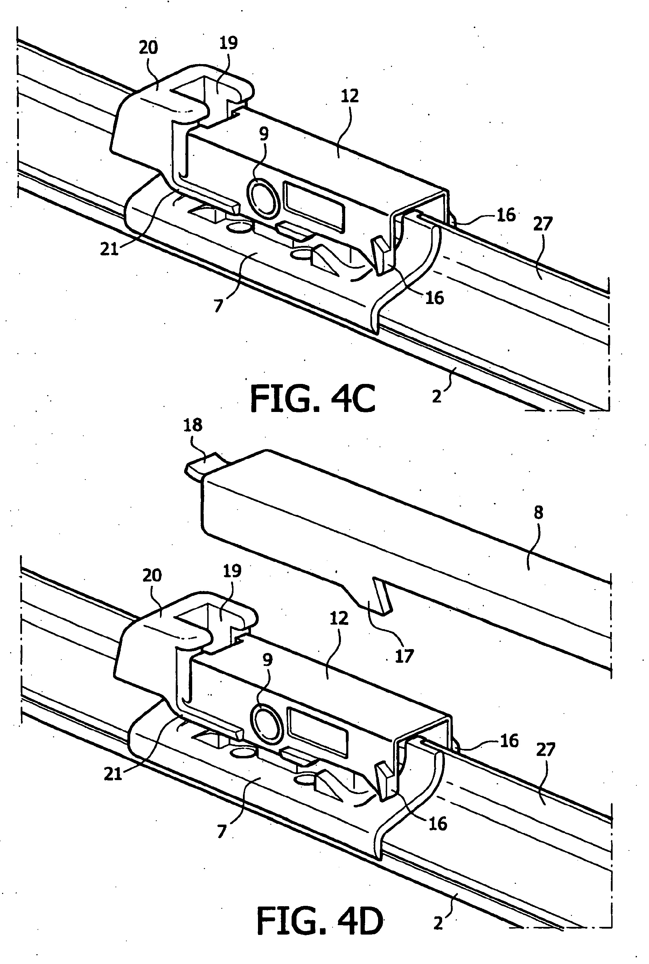

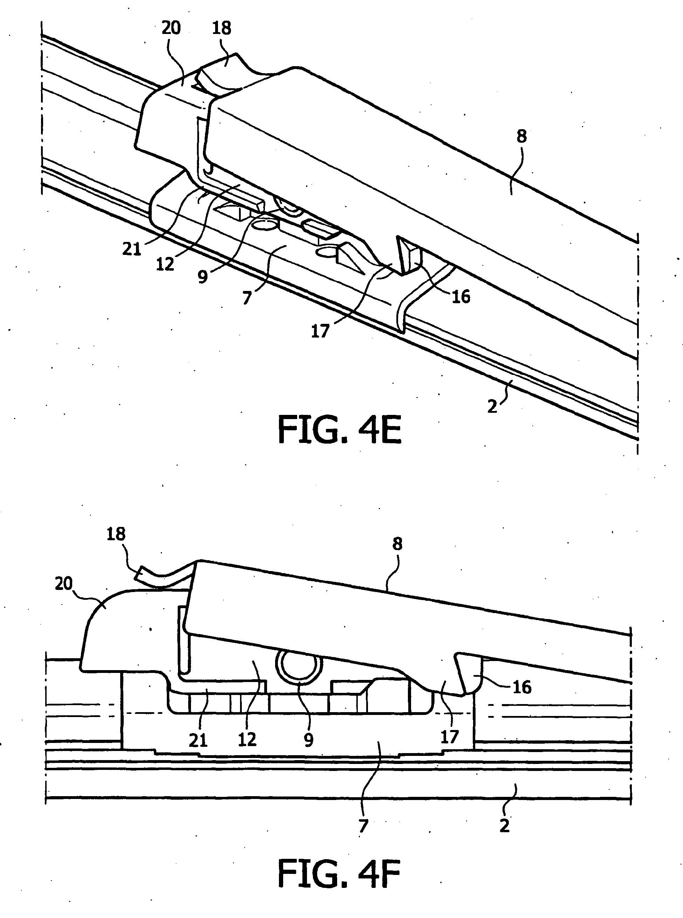

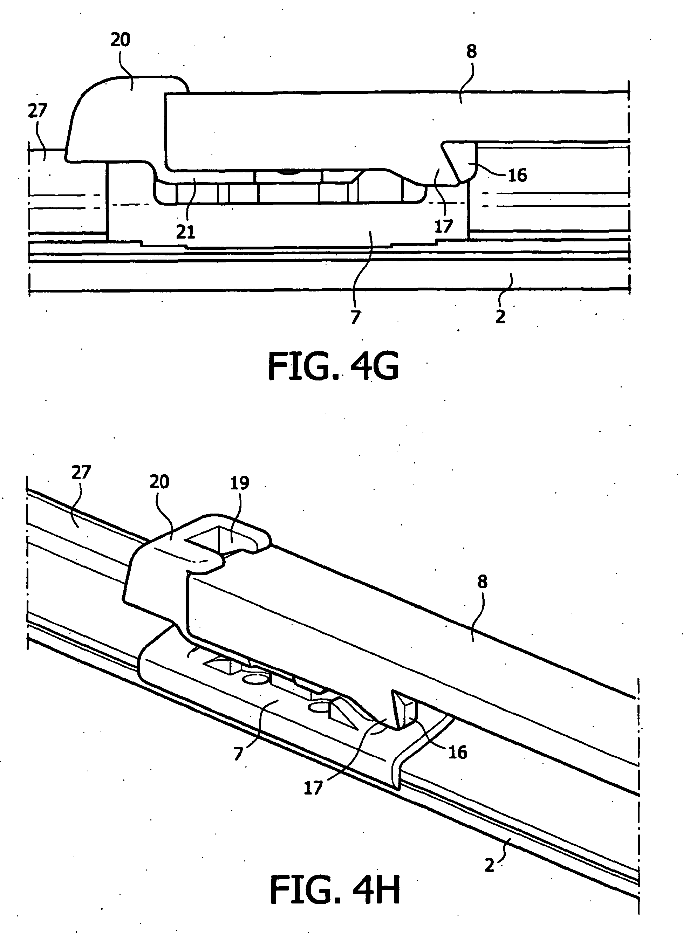

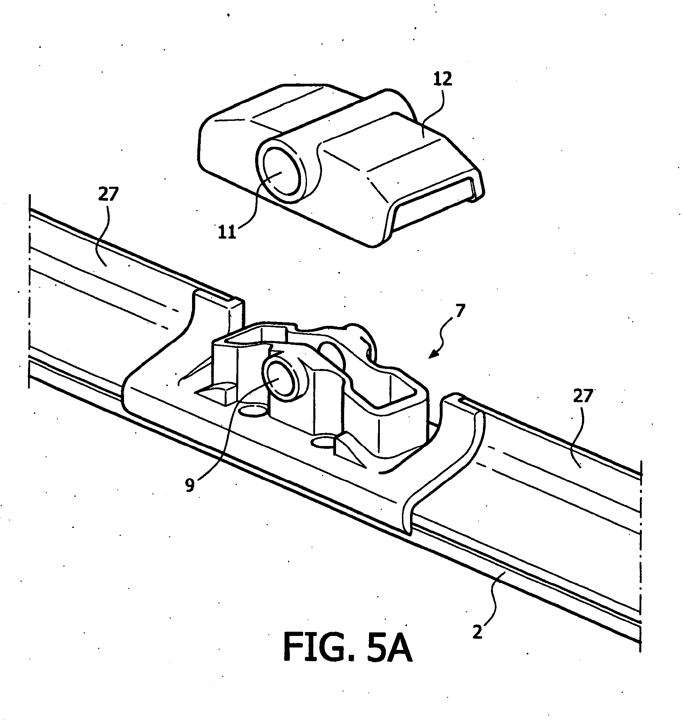

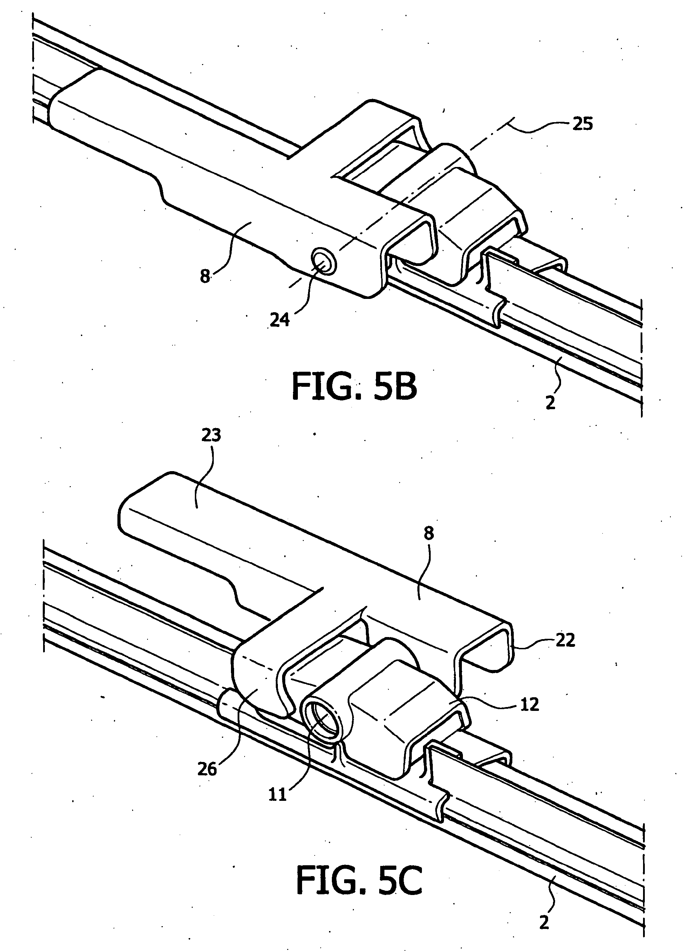

Figures 4 and 5 correspond to figure 3, but now relating to a different type of joint part 12 and a different type of oscillating arm, wherein corresponding parts have been designated with the same reference numerals. A connecting device 7 as shown in figures 4 and 5 is identical to the same of figure 2, so that said connecting device 7 is a true universal part for several types of interconnection between a wiper blade 2 and an oscillating arm 8. Actually, the embodiments of figures 3 through 5 basically differ in the way the oscillating arm 8 is pivotally connected to said joint part 12. While in the embodiment of figure 3 a so-called bayonet-connection is used for detachably connecting said oscillating arm 8 to said joint part 12, in the embodiment of figure 4 a snap connection is applied for detachably connecting said oscillating arm 8 to said joint part 12, while in figure 5 a side connection is used for that purpose.

Figure 4 shows the steps of mounting the wiper blade 2 onto the oscillating arm 8. Starting with the connecting device 7 being fixedly connected by gluing onto the strips 4 of the wiper blade 2 (figure 4A), the joint part 12 is first clipped onto the connecting device 7 (figures 4B and 4C), while said oscillating arm 8 is subsequently pivoted relative to said joint part 12 in an inclined position with respect to said wiper blade 2, so that protrusions 16 each extending sidewards from a longitudinal side of said joint part 12 are hooking behind correspondingly shaped protrusion 17 on said oscillating arm 8 (figures 4D and 4E). As can be seen from figure 4D, said oscillating arm 8 has an U-shaped cross-section at the location of its connection to said joint part 12, whereas said protrusions 17 each extend downwards from a leg of said U-shaped cross-section. Finally, said oscillating arm 8 may then be pivoted back relative to said joint part 12 in a position parallel to the wiper blade 2 (figure 2F). As a consequence thereof a top surface of said free end of said oscillating arm 8 together with a stiff finger 18 will be clipped/snapped in a recess 19 at a free end 20 of said joint part 12, so that the present windscreen wiper device 1 is ready for use (figures 4G and 4H). By a reciprocal movement the wiper blade 2 can be released from the oscillating arm 8. Said snapping movement is realized, as said free end 20 of said joint part 12 is made resiliently, so that it can pivot about a hinge axis 21 (figure 4F).

In the embodiment of figure 5 the free end of the oscillating arm 8 has a U-shaped cross-section, wherein legs 22 of the U-shaped cross-section are orientated towards a windscreen to be wiped and wherein a base 23 of the U-shaped cross-section is orientated parallel to a windscreen to be wiped. Between the legs 22 of the U-shaped cross-section and protruding in a direction towards the wiper blade 2 is a joint pin or pivot pin 24 whose pivot axis 25 extends in a direction of the oscillating movement of the oscillating arm 8. The diameter of the pivot pin 24 is adapted to the diameter of the bearing bores or through holes 10 in said connecting device 7 and to the diameter of the recesses 11 of said joint part 12, said through holes 10 and said recesses 11 being co-axial. In order to secure or retain the connecting device 7 (and thus the wiper blade 2) onto the ocillating arm 8 said oscillating arm 8 is provided with an extension comprising said pivot pin 24 and a L-shaped shoulder 26 which projects out in the direction of said pivot pin 24 and across said wiper blade 2 and at the free end of which is disposed a leg facing the windscreen.

Possibly, a spoiler 27 is furthermore present being made in one piece with said wiper blade 2.

The invention is not restricted to the variants shown in the drawing, but it also extends to other embodiments that fall within the scope of the appended claims.

## Claims

1. A windscreen wiper device (1) comprising an elastic, elongated carrier element, as well as an elongated wiper blade (2) of a flexible material, which can be placed in abutment with a windscreen to be wiped, which wiper blade (2) includes opposing longitudinal grooves (3) on its longitudinal sides, in which grooves (3) spaced-apart longitudinal strips (4) of the carrier element are disposed, wherein neighbouring ends (5) of said longitudinal strips (4) are interconnected by a respective connecting piece (6), which windscreen wiper device (1) comprises a connecting device (7) for an oscillating arm (8), wherein said oscillating arm (8) is pivotally connected to said connecting device (7) about a pivot axis near one end, with the interposition of a joint part (12) wherein said joint part (12) is detachably connected to said connecting device (7) by engaging protrusions (9) of said connecting device (7), at the location of said pivot axis, in recesses (11) provided in said joint part (12), and wherein said protrusions (9) are provided with co-axial through holes (10), wherein the protrusions (9) and their co-axial through holes (10) are at least substantially cylindrical **characterized in that** the protrusions (9) extend outwards on either side of said connecting device (7).

2. A windscreen wiper device (1) according to claim 1, wherein said joint part (12) is detachably connected to said connecting device (7) through a snapping/clipping operation.

3. A windscreen wiper device (1) according to claim 1 or 2, wherein said joint part (12) has an at least substantially U-shaped cross-section at the location of its connection to said connecting device (7), and wherein said joint part (12) in each leg of said U-shaped cross-section is provided with a recess (11) provided coaxially with said pivot axis.

4. A windscreen wiper device (1) according to claim 1, 2 or 3, wherein said joint part (12) is pivotally connected to said connecting device (7), wherein said protrusions (9) of said connecting device (7) pivotally engage in said recesses (11) of said joint part (12), wherein said joint part (12) comprises at least one resilient tongue (13) engaging in a correspondingly shaped hole (14) provided in said oscillating arm (8), and wherein said resilient tongue (13) is rotatable along a hinge axis between an outward position retaining said wiper blade (2) onto said oscillating arm (8) and an inward position releasing said wiper blade (2) from said oscillating arm (8).

5. A windscreen wiper device (1) according to claim 4, wherein said hinge axis is located near an inner edge of said joint part (12).

6. A windscreen wiper device (1) according to claim 4, wherein said hinge axis is located near an outer edge of said joint part (12).

7. A windscreen wiper device (1) according to claim 4, 5 or 6, wherein said oscillating arm (8) has an at least substantially U-shaped cross-section at the location of its connection to said joint part (12), and wherein said hole (14) is provided in a base (15) of said U-shaped cross-section.

8. A windscreen wiper device (1) according to any of the preceding claims 4 through 7, wherein said joint part (12) comprises at least two lateral resilient tongues (13) extending outwardly, wherein said oscillating arm (8) has an at least substantially U-shaped cross-section at the location of its connection to said joint part (12), and wherein each tongue (13) engages in a correspondingly shaped hole (14) provided in a leg of said U-shaped cross-section.

9. A windscreen wiper device (1) according to any of the preceding claims 4 through 8, wherein said hole(s) (14) has/have a closed circumference.

10. A windscreen wiper device (1) according to any of the preceding claims 1 through 3, wherein said joint part (12) is pivotally connected to said connecting device (7), wherein said protrusions (9) of said connecting device (7) pivotally engage in said recesses (11) of said joint part (12), wherein said joint part (12) has an at least substantially U-shaped cross-section at the location of its connection to said connecting device (7), and wherein said joint part (12) comprises a recess (19) in the base of the U-shaped cross-section for snappingly connecting said oscillating arm (8) to said joint part (12).

11. A windscreen wiper device (1) according to claim 10, wherein a resilient free end (20) of said joint part (12) can pivot about a hinge axis (21) for snappingly connecting said oscillating arm (8) to said joint part (12).

12. A windscreen wiper device (1) according to claim 11, wherein said resilient free end (20) of said joint part (12) can pivot about said hinge axis (21) between a first position for mounting or dismounting a free end of said oscillating arm (8) into or from said recess (19) in the base of the U-shaped cross-section of said joint part (12), and a second position for connecting said free end of said of said oscillating arm (8) to said joint part (12).

13. A windscreen wiper device (1) according to claim 10, 11 or 12 wherein said joint part (12) comprises at least one protrusion (16) extending laterally from a longitudinal side of said joint part (12), said protrusion (16) hooking behind a correspondingly shaped protrusion (17) on said oscillating arm (8) for blocking a longitudinal movement of said wiper blade (2) with respect to said oscillating arm (8).

14. A windscreen wiper device (1) according to claim 13, wherein for connecting said oscillating arm (8) to said joint part (12) said oscillating arm (8) is pivoted relative to said joint part (12) in an inclined position with respect to said wiper blade (2), so that said protrusion (16) on said joint part (12) is hooking behind said correspondingly shaped protrusion (17) on said oscillating arm (8), and wherein said oscillating arm (8) is pivoted back relative to said joint part (12) in a parallel position with respect to said wiper blade (2), so that a free end of said oscillating arm (8) is snapped in said recess (19) at the free end (20) of said joint part (12).

15. A windscreen wiper device (1) according to any of the preceding claims 1 through 3, wherein said connecting device (7) is pivotally connected to said oscillating arm (8) near its free end about a pivot axis of a transverse pivot pin (24) provided on said oscillating arm (8), said pivot pin being inserted into said co-axial through holes (10) of said protrusions (9) of said connecting device (7).

16. A windscreen wiper device (1) according to claim 15, wherein said joint part (12) has an at least substantially U-shaped cross-section at the location of its connection to said connecting device (7), wherein said joint part (12) in each leg of said U-shaped cross-section is provided with a recess (11) provided coaxially with said pivot axis, said recesses (11) being co-axial, and wherein said pivot pin (24) is inserted into said co-axial recesses (11) and into said co-axial through holes (10) of said protrusions (9) of said connecting device (7).

## Patentansprüche

1. Scheibenwischervorrichtung (1), die ein elastisches, längliches Trägerelement sowie ein längliches Wischerblatt (2) aus einem flexiblen Material umfasst, das an einer zu wischenden Windschutzscheibe anliegend angeordnet werden kann, wobei das Wischerblatt (2) einander gegenüberliegende Längsnuten (3) an seinen Längsseiten enthält und in diesen Nuten (3) beabstandete Längsstreifen (4) des Trägerelementes angeordnet sind, benachbarte Enden (5) der Längsstreifen (4) durch ein jeweiliges Verbindungsstück (6) miteinander verbunden sind und die Scheibenwischervorrichtung (1) eine Verbindungsvorrichtung (7) für einen Schwingarm (8) umfasst, der Schwingarm (8) um eine Schwenkachse in der Nähe eines Endes schwenkbar mit der Verbindungsvorrichtung (1) verbunden ist und sich ein Gelenkteil (12) dazwischen befindet, wobei der Gelenkteil (12) lösbar mit der Verbindungsvorrichtung (7) verbunden wird, indem Vorsprünge (9) der Verbindungsvorrichtung (7) an der Position der Schwenkachse mit Vertiefungen (11) in Eingriff gebracht werden, die in dem Gelenkteil (12) vorhanden sind, die Vorsprünge (9) mit koaxialen Durchgangslöchern (10) versehen sind und die Vorsprünge (9) sowie ihre koaxialen Durchgangslöcher (10) wenigstens im Wesentlichen zylindrisch sind, **dadurch gekennzeichnet, dass** sich die Vorsprünge (9) an beiden Seiten der Verbindungsvorrichtung (7) nach außen erstrecken.

2. Scheibenwischervorrichtung (1) nach Anspruch 1, wobei der Verbindungsteil (12) über einen Einrast-/Klammervorgang lösbar mit der Verbindungsvorrichtung (7) verbunden wird.

3. Scheibenwischervorrichtung (1) nach Anspruch 1 oder 2, wobei der Verbindungsteil (12) an der Position seiner Verbindung mit der Verbindungsvorrichtung (7) einen wenigstens im Wesentlichen U-förmigen Querschnitt hat und der Gelenkteil (12) an jedem Schenkel des U-förmigen Querschnitts mit einer Vertiefung (11) versehen ist, die koaxial zu der Schwenkachse verbunden ist.

4. Scheibenwischervorrichtung (1) nach Anspruch 1, 2 oder 3, wobei der Gelenkteil (12) schwenkbar mit der Verbindungsvorrichtung (7) verbunden ist, die Vorsprünge (9) der Verbindungsvorrichtung (7) schwenkbar in die Vertiefungen (11) des Gelenkteils (12) eingreifen, der Gelenkteil (12) wenigstens eine federnde Zunge (13) umfasst, die in ein entsprechend geformtes Loch (14) eingreift, das in dem Schwingarm (8) vorhanden ist, und die federnde Zunge (13) entlang einer Scharnierachse zwischen einer äußeren Position, in der das Wischerblatt (2) an dem Schwingarm (8) gehalten wird, und einer inneren Position gedreht werden kann, in der das Wischerblatt (2) von dem Schwingarm (8) gelöst wird.

5. Scheibenwischervorrichtung (1) nach Anspruch 4, wobei sich die Scharnierachse in der Nähe einer Innenkante des Gelenkteils (12) befindet.

6. Scheibenwischervorrichtung (1) nach Anspruch 4, wobei sich die Scharnierachse in der Nähe einer Außenkante des Gelenkteils (12) befindet.

7. Scheibenwischervorrichtung (1) nach Anspruch 4, 5 oder 6, wobei der Schwingarm (8) an der Position seiner Verbindung mit dem Gelenkteil (12) einen wenigstens im Wesentlichen U-förmigen Querschnitt hat, und das Loch (14) in einer Basis (15) des U-förmigen Querschnitts vorhanden ist.

8. Scheibenwischervorrichtung (1) nach einem der vorangehenden Ansprüche 4 bis 7, wobei der Gelenkteil (12) wenigstens zwei seitliche Federzungen (13) umfasst, die sich nach außen erstrecken, der Schwingarm (8) einen wenigstens im Wesentlichen U-förmigen Querschnitt an der Position seiner Verbindung mit dem Gelenkteil (12) hat und jede Zunge (13) in ein entsprechend geformtes Loch (14) eingreift, das in einem Schenkel des U-förmigen Querschnitts vorhanden ist.

9. Scheibenwischervorrichtung (1) nach einem der vorangehenden Ansprüche 4 bis 8, wobei das Loch/die Löcher (14) einen geschlossenen Umfang hat/haben.

10. Scheibenwischervorrichtung (1) nach einem der vorangehenden Ansprüche 1 bis 3, wobei der Gelenkteil (12) schwenkbar mit der Verbindungsvorrichtung (7) verbunden ist, die Vorsprünge (9) der Verbindungsvorrichtung (7) schwenkbar in die Vertiefungen (11) des Gelenkteils (12) eingreifen, der Gelenkteil (12) an der Position seiner Verbindung mit der Verbindungsvorrichtung (7) einen wenigstens im Wesentlichen U-förmigen Querschnitt hat und der Gelenkteil (12) eine Vertiefung (19) in der Basis des U-förmigen Querschnitts zur einrastenden Verbindung des Schwingarms (8) mit dem Gelenkteil (12) aufweist.

11. Scheibenwischervorrichtung (1) nach Anspruch 10, wobei ein federndes freies Ende (20) des Gelenkteils (12) um eine Scharnierachse (21) herum geschwenkt werden kann, um den Schwingarm (8) einrastend mit dem Gelenkteil (12) zu verbinden.

12. Scheibenwischervorrichtung (1) nach Anspruch 11, wobei das federnde freie Ende (20) des Gelenkteils (12) um die Scharnierachse (21) herum zwischen einer ersten Position zum Anbringen oder Entfernen eines freien Endes des Schwingarms (8) in der Vertiefung (19) in der Basis des U-förmigen Querschnitts des Gelenkteils (12) oder zum Entfernen daraus und einer zweiten Position zum Verbinden des freien Endes des Schwingarms (8) mit dem Gelenkteil (12) geschwenkt werden kann.

13. Scheibenwischervorrichtung (1) nach Anspruch 10, 11 oder 12, wobei der Gelenkteil (12) wenigstens einen Vorsprung (16) umfasst, der sich seitlich von einer Längsseite des Gelenkteils (12) erstreckt, und der Vorsprung (16) hinter einem entsprechend geformten Vorsprung (17) an dem Schwingarm (8) eingehakt wird, um eine Längsbewegung des Wischerblatts (2) in Bezug auf den Schwingarm (8) zu verhindern.

14. Scheibenwischervorrichtung (1) nach Anspruch 13, wobei zur Verbindung des Schwingarms (8) mit dem Gelenkteil (12) der Schwingarm (8) relativ zu dem Gelenkteil (12) an eine geneigte Position in Bezug auf das Wischerblatt (2) geschwenkt wird, so dass der Vorsprung (16) an dem Gelenkteil (12) hinter dem entsprechend geformten Vorsprung (17) an dem Schwingarm (8) eingehakt wird, und der Schwingarm (8) relativ zu dem Gelenkteil (12) an eine parallele Position in Bezug auf das Wischerblatt (2) zurückgeschwenkt wird, so dass ein freies Ende des Schwingarms (8) in die Vertiefung (19) an dem freien Ende (20) des Gelenkteils (12) einrastet.

15. Scheibenwischervorrichtung (1) nach einem der vorangehenden Ansprüche 1 bis 3, wobei die Verbindungsvorrichtung (7) in der Nähe ihres freien Endes um eine Schwenkachse eines Quer-Schwenkzapfens (24), der an dem Schwingarm (8) vorhanden ist, schwenkbar mit dem Schwingarm (8) verbunden ist, und der Schwenkzapfen in die koaxialen Durchgangslöcher (10) der Vorsprünge (9) der Verbindungsvorrichtung (7) eingeführt ist.

16. Scheibenwischervorrichtung (1) nach Anspruch 15, wobei der Gelenkteil (12) an der Position einer Verbindung mit der Verbindungsvorrichtung (7) einen wenigstens im Wesentlichen U-förmigen Querschnitt hat, der Gelenkteil (12) in jedem Schenkel des U-förmigen Querschnitts mit einer Vertiefung (11) versehen ist, die koaxial zu der Schwenkachse vorhanden ist, die Vertiefungen (11) koaxial sind und der Schwenkzapfen (14) in die koaxialen Vertiefungen (11) sowie in die koaxialen Durchgangslöcher (10) der Vorsprünge (9) der Verbindungsvorrichtung (7) eingeführt ist.

## Revendications

1. Dispositif d'essuie-glace (1) pour pare-brise comprenant un élément de support élastique de forme allongée ainsi qu'un balai d'essuie-glace (2) de forme allongée constitué d'un matériau souple pouvant être placé contre un pare-brise à essuyer, ledit balai d'essuie-glace (2) comprenant des rainures longitudinales opposées (3) sur ses côtés longitudinaux, dans lesquelles sont disposées des bandes longitudinales espacées (4) de l'élément de support, où les extrémités voisines (5) desdites bandes longitudinales (4) sont reliées entre elles par une pièce de liaison respective (6) ; ledit dispositif d'essuie-glace (1) pour pare-brise comprend un dispositif de raccordement (7) pour bras oscillant (8), dans lequel ledit bras oscillant (8) est relié en pivotement audit dispositif de raccordement (7) autour d'un axe de pivotement à proximité d'une extrémité libre, une partie de joint (12) étant interposée, dans lequel ladite partie de joint (12) est raccordée de façon amovible audit dispositif de raccordement (7) par mise en contact de protubérances (9) dudit dispositif de raccordement (7), au niveau dudit axe de pivotement, dans des évidements (11) ménagés dans ladite partie de joint (12) et dans lequel lesdites protubérances (9) comportent des trous débouchants coaxiaux (10), les protubérances (9) et leurs trous débouchants coaxiaux (10) étant au moins sensiblement cylindriques, **caractérisé en ce que** les protubérances (9) s'étendent vers l'extérieur sur les deux côtés dudit dispositif de raccordement (7).

2. Dispositif d'essuie-glace (1) pour pare-brise selon la revendication 1, dans lequel ladite partie de joint (12) est raccordée de façon amovible audit dispositif de raccordement (7) par une opération d'encliquetage/assemblage.

3. Dispositif d'essuie-glace (1) pour pare-brise selon la revendication 1 ou la revendication 2, dans lequel ladite partie de joint (12) présente une section transversale au moins sensiblement en forme de U au niveau de son raccordement audit dispositif de raccordement (7) et dans lequel ladite partie de joint (12) de chaque pied de ladite section transversale en forme de U comporte un évidement (11) disposé co-axialement par rapport audit axe de pivotement.

4. Dispositif d'essuie-glace (1) pour pare-brise selon la revendication 1, la revendication 2 ou la revendication 3, dans lequel ladite partie de joint (12) est reliée en pivotement audit dispositif de raccordement (7) ; lesdites protubérances (9) dudit dispositif de raccordement (7) sont introduites par pivotement dans lesdits évidements (11) de ladite partie de joint (12) ; ladite partie de joint (12) comprend au moins une languette élastique (13) encastrée dans un trou (14) de forme correspondante ménagé dans ledit bras oscillant (8) et dans lequel ladite languette élastique (13) peut tourner autour d'un axe d'articulation entre une position extérieure maintenant ledit balai d'essuie-glace (2) sur ledit bras oscillant (8) et une position intérieure libérant ledit balai d'essuie-glace (2) dudit bras oscillant (8).

5. Dispositif d'essuie-glace (1) pour pare-brise selon la revendication 4, dans lequel ledit axe d'articulation est situé à proximité d'un bord interne de ladite partie de joint (12).

6. Dispositif d'essuie-glace (1) pour pare-brise selon la revendication 4, dans lequel ledit axe d'articulation est situé à proximité d'un bord externe de ladite partie de joint (12).

7. Dispositif d'essuie-glace (1) pour pare-brise selon la revendication 4, la revendication 5 ou la revendication 6, dans lequel ledit bras oscillant (8) présente une section transversale au moins sensiblement en forme de U au niveau de son raccordement à ladite partie de joint (12), et dans lequel ledit trou (14) est ménagé dans un socle (15) de ladite section transversale en forme de U.

8. Dispositif d'essuie-glace (1) pour pare-brise selon l'une quelconque des revendications 4 à 7, dans lequel ladite partie de joint (12) comprend au moins deux languettes élastiques latérales (13) s'étendant vers l'extérieur, dans lequel ledit bras oscillant (8) présente une section transversale au moins sensiblement en forme de U au niveau de son raccordement à ladite partie de joint (12), et dans lequel chaque languette (13) est introduite dans un trou (14) de forme correspondante ménagé dans un pied de ladite section transversale en forme de U.

9. Dispositif d'essuie-glace (1) pour pare-brise selon l'une quelconque des revendications 4 à 8, dans lequel le ou les dit(s) trou(s) (14) présente(nt) une circonférence fermée.

10. Dispositif d'essuie-glace (1) pour pare-brise selon l'une quelconque des revendications 1 à 3, dans lequel ladite partie de joint (12) est reliée en pivotement audit dispositif de raccordement (7), dans lequel les dites protubérances (9) dudit dispositif de raccordement (7) sont introduites en pivotement dans lesdits évidements (11) de ladite partie de joint (12), dans lequel ladite partie de joint (12) présente une section transversale au moins sensiblement en forme de U au niveau de son raccordement audit dispositif de raccordement (7), et dans lequel ladite partie de joint (12) comporte un évidement (19) dans le socle de la section transversale en forme de U pour raccorder par encliquetage ledit bras oscillant (8) à ladite partie de joint (12).

11. Dispositif d'essuie-glace (1) pour pare-brise selon la revendication 10, dans lequel une extrémité libre élastique (20) de ladite partie de joint (12) peut pivoter autour d'un axe d'articulation (21), afin de raccorder ledit bras oscillant (8) à ladite partie de joint (12) par encliquetage.

12. Dispositif d'essuie-glace (1) pour pare-brise selon la revendication 11, dans lequel ladite extrémité libre élastique (20) de ladite partie de joint (12) peut pivoter autour dudit axe d'articulation (21) entre une première position destinée à monter ou à démonter une extrémité libre dudit bras oscillant (8) dans ou hors dudit évidement (19) situé dans le socle de la section transversale en forme de U de ladite partie de joint (12) et une seconde position destinée à raccorder ladite extrémité libre dudit bras oscillant (8) à ladite partie de joint (12).

13. Dispositif d'essuie-glace (1) pour pare-brise selon la revendication 10, la revendication 11 ou la revendication 12, dans lequel ladite partie de joint (12) comprend au moins une protubérance (16) s'étendant latéralement par rapport à un côté longitudinal de ladite partie de joint (12), ladite protubérance (16) s'accrochant derrière une protubérance (17) de forme correspondante sur ledit bras oscillant (8), afin de bloquer un mouvement longitudinal dudit balai d'essuie-glace (2) par rapport audit bras oscillant (8).

14. Dispositif d'essuie-glace (1) pour pare-brise selon la revendication 13, dans lequel, pour raccorder ledit bras oscillant (8) à ladite partie de joint (12), ledit bras oscillant (8) pivote par rapport à ladite partie de joint (12) dans une position inclinée par rapport audit balai d'essuie-glace (2), de manière que ladite protubérance (16) sur ladite partie de joint (12) soit accrochée derrière ladite protubérance (17) de forme correspondante sur ledit bras oscillant (8), et dans lequel ledit bras oscillant (8) pivote en sens inverse de ladite partie de joint (12) dans une position parallèle audit balai d'essuie-glace (2), de manière qu'une extrémité libre dudit bras oscillant (8) s'encliquète dans ledit évidement (19) situé à l'extrémité libre (20) de ladite partie de joint (12).

15. Dispositif d'essuie-glace (1) pour pare-brise selon l'une quelconque des revendications 1 à 3 précédentes, dans lequel ledit dispositif de raccordement (7) est relié en pivotement audit bras oscillant (8) à proximité de son extrémité libre autour d'un axe de pivotement d'un pivot transversal (24) ménagé sur ledit bras oscillant (8), ledit pivot étant inséré dans les dits trous débouchants coaxiaux (10) desdites protubérances (9) dudit dispositif de raccordement (7).

16. Dispositif d'essuie-glace (1) pour pare-brise selon la revendication 15, dans lequel ladite partie de joint (12) présente une section transversale au moins sensiblement en forme de U au niveau de son raccordement audit dispositif de raccordement (7), dans lequel ladite partie de joint (12) de chaque pied de ladite section transversale en forme de U est dotée d'un évidement (11) disposé co-axialement par rapport audit axe de pivotement, lesdits évidements (11) étant co-axiaux, et dans lequel ledit pivot (24) est inséré dans lesdits évidements co-axiaux (11) et dans lesdits trous débouchants co-axiaux (10) desdites protubérances (9) dudit dispositif de raccordement (7).
